# EUROPÄISCHE PATENTANMELDUNG

(11) **EP 3 495 936 A1**
(43) Veröffentlichungstag der Anmeldung: **12.06.2019**
(21) Anmeldenummer: 17205836.4
(22) Anmeldetag: 07.12.2017
(51) Int. Cl.: G06F 3/0488, G02B 27/01

(54) **SICHERE BRILLENARTIGE VORRICHTUNG UND VERFAHREN**

(71) Anmelder: Siemens Aktiengesellschaft, 80333 München (DE)
(72) Erfinder: Glaser, Maximilian, 91365 Weilersbach (DE); Kersten, Thomas, 91080 Marloffstein (DE); Singer, Marc, 91301 Forchheim (DE)

(57) **Zusammenfassung**

Die Erfindung betrifft eine brillenartige Vorrichtung (1), wobei ein Gesamtbild mittels Überlagerung des ersten Teilbildes (a3) und des zweiten Teilbildes (a4) sicher darstellbar ist, wobei ein ordnungsgemäßes Gesamtbild vom Bediener (2) erkennbar ist, wobei eine Aktion bei Übereinstimmung von wenigstens zwei Bildinformationen sicher ausführbar ist. Ferner betrifft die Erfindung ein Verfahren zur Darstellung eines Gesamtbildes und/oder zum Ausführen einer Aktion mit einer brillenartigen Vorrichtung.

## Beschreibung

Die Erfindung betrifft eine brillenartige Vorrichtung sowie ein Verfahren zur Darstellung eines Gesamtbildes und/oder zum Ausführen einer Aktion mit einer brillenartigen Vorrichtung.

Als sichere Eingabegeräte dienen, insbesondere aus Sicherheitsgründen, heute nur redundant ausgeführte Taster, Schalter oder andere anwendungsspezifische Zusatzkomponenten. Diese sind meist fest mit einer Maschine - z. B. Werkzeugmaschine - verbunden und nicht flexibel verwendbar.

Als sichere Anzeigegeräte dienen heute hauptsächlich einfache Systeme wie Lampen oder Bedruckungen. Auch Bildschirme können Anzeigen sicher wiedergeben. Dies ist jedoch mit hohem Aufwand verbunden. Die Bildschirme sind zudem fest mit einer Maschine verbunden.

Geräte, die eine sichere Eingabe und eine sichere Anzeige vereinen, gibt es, insbesondere im Bereich der Werkzeugmaschinen, bisher nicht. Zudem gibt es keine derartigen Geräte, die portabel sind.

Die Patentschrift DE 19625028 C1 beschreibt eine brillenartige Vorrichtung zur Einblendung von Zusatzinformationen in den Sichtbereich einer Person unter Verwendung einer visuellen Informationen ausstrahlenden Signalquelle sowie eines diese Informationen in den Sichtbereich projizierenden optischen Systems.

Der Erfindung liegt die Aufgabe zugrunde, eine sichere Eingabe und/oder eine sichere Anzeige mittels einer portablen Vorrichtung zu ermöglichen.

Die Lösung der Aufgabe gelingt durch eine brillenartige Vorrichtung mit den Merkmalen gemäß Anspruch 1, d.h. eine brillenartige Vorrichtung umfassend eine erste Recheneinheit, eine von der ersten Recheneinheit unabhängige zweite Recheneinheit, eine erste Anzeigeeinheit, eine von der ersten Anzeigeeinheit unabhängige zweite Anzeigeeinheit, eine erste Erfassungseinheit, eine von der ersten unabhängige zweite Erfassungseinheit, wobei die erste Erfassungseinheit einen ersten Umgebungsbereich eines Bedieners erfasst, wobei die erste Erfassungseinheit den ersten Umgebungsbereich in eine erste von der ersten Recheneinheit verarbeitbare Bildinformation umwandelt, wobei die zweite Erfassungseinheit einen zweiten Umgebungsbereich des Bedieners erfasst, wobei die zweite Erfassungseinheit den zweiten Umgebungsbereich in eine zweite von der zweiten Recheneinheit verarbeitbare Bildinformation umwandelt, wobei sich der erste Umgebungsbereich und der zweite Umgebungsbereich überschneiden, wobei die erste Erfassungseinheit die erste Bildinformation an die erste Recheneinheit übergibt, wobei die zweite Erfassungseinheit die zweite Bildinformation an die zweite Recheneinheit übergibt, wobei eine Aktion bei Übereinstimmung der ersten Bildinformation und der zweiten Bildinformation ausführbar ist, und/oder wobei die erste Recheneinheit ein erstes Teilbild generiert, wobei die erste Recheneinheit das erste Teilbild an die erste Anzeigeeinheit übergibt, wobei die erste Anzeigeeinheit das erste Teilbild anzeigt, wobei die zweite Recheneinheit ein zweites Teilbild generiert, wobei die zweite Recheneinheit das zweite Teilbild an die zweite Anzeigeeinheit übergibt, wobei die zweite Anzeigeeinheit das zweite Teilbild anzeigt, wobei ein Gesamtbild mittels Überlagerung des ersten Teilbildes und des zweiten Teilbildes sicher darstellbar ist, wobei ein ordnungsgemäßes Gesamtbild vom Bediener erkennbar ist.

Weitere vorteilhafte Ausführungsformen der Erfindung ergeben sich aus den Unteransprüchen 2 bis 10.

Ferner gelingt die Lösung der Aufgabe durch ein Verfahren gemäß Anspruch 11, d.h. ein Verfahren zur Darstellung eines Gesamtbildes und/oder zum Ausführen einer Aktion mit einer brillenartigen Vorrichtung mit folgenden Schritten: Erfassen eines ersten Umgebungsbereichs eines Bedieners durch eine erste Erfassungseinheit, Umwandeln des ersten Umgebungsbereichs in eine erste von einer ersten Recheneinheit verarbeitbare Bildinformation, Erfassen eines zweiten Umgebungsbereichs des Bedieners durch eine zweite Erfassungseinheit, Umwandeln des zweiten Umgebungsbereichs in eine zweite von einer zweiten Recheneinheit verarbeitbare Bildinformation, Übergeben der ersten Bildinformation von der ersten Erfassungseinheit an die erste Recheneinheit, Übergeben der zweiten Bildinformation von der zweiten Erfassungseinheit an die zweite Recheneinheit, wobei eine Aktion bei Übereinstimmung der ersten Bildinformation und der zweiten Bildinformation sicher ausgeführt wird, und/oder Generieren eines ersten Teilbilds durch die erste Recheneinheit, Übergeben des ersten Teilbilds von der ersten Recheneinheit an eine erste Anzeigeeinheit, Anzeigen des ersten Teilbilds durch die erste Anzeigeeinheit, Generieren eines zweiten Teilbilds durch die zweite Recheneinheit, Übergeben des zweiten Teilbilds von der zweiten Recheneinheit an eine zweite Anzeigeeinheit, Anzeigen des zweiten Teilbilds durch die zweite Anzeigeeinheit, wobei ein Gesamtbild mittels Überlagerung des ersten Teilbilds und des zweiten Teilbilds sicher dargestellt wird, wobei ein ordnungsgemäßes Gesamtbild vom Bediener erkannt wird.

Weitere vorteilhafte Ausführungsformen der Erfindung ergeben sich aus den Unteransprüchen 12 bis 16.

Die genannte Reihenfolge der in Anspruch 11 genannten Schritte ist nicht obligatorisch. Die Schritte können auch in einer anderen Reihenfolge ausgeführt werden.

Sicher bedeutet hierbei, dass die brillenartige Vorrichtung und/oder das Verfahren zur Darstellung eines Gesamtbildes und/oder zum Ausführen einer Aktion mit einer brillenartigen Vorrichtung ausfallsicher bzw. versagenssicher sind.

Diese Sicherheit wird vorzugsweise durch Redundanz erreicht.

Die brillenartige Vorrichtung umfasst redundant ausgeführte Komponenten wie beispielsweise die erste Recheneinheit und die zweite Recheneinheit.

Das Verfahren zur Darstellung eines Gesamtbildes und/oder zum Ausführen einer Aktion mit einer brillenartigen Vorrichtung basiert zudem auf eben dieser Redundanz.

In einer vorteilhaften Ausführungsform der Erfindung ist die brillenartige Vorrichtung derart ausgebildet, eine Werkzeugmaschine und/oder eine Produktionsmaschine und/oder einen Roboter zu bedienen.

Werkzeugmaschinen sind Maschinen zur Fertigung von Werkstücken mit Werkzeugen, deren Bewegung zueinander durch die Maschine vorgegeben wird. Zu den Werkzeugmaschinen zählen mitunter Drehmaschinen, Fräsmaschinen, Schneidmaschinen, Erodiermaschinen, Pressen und Maschinenhämmer. Häufig sind Werkzeugmaschinen als CNC-Maschinen (Computerized Numerical Control) ausgeführt und verfügen über eine rechnergestützte numerische Steuereinheit, mittels welcher Werkstücke automatisiert und komplexe Formen mit hoher Präzision hergestellt werden können.

Produktionsmaschinen sind Maschinen, die zur Produktion von unterschiedlichen Dingen eingesetzt werden. Hierzu zählen beispielsweise Produktionsmaschinen zum Druck von Zeitungen, Produktionsmaschinen, die Gegenstände mittels additiver Fertigung produzieren, Spritzgussmaschinen, Produktionsmaschinen in der Lebensmittel- bzw. Getränkeindustrie, Papiermaschinen zur Herstellung von Papier, Karton und/oder Pappe und Produktionsmaschinen zur Produktion von Metallen und/oder Blechen.

Roboter, insbesondere Industrieroboter, sind programmierbare Maschinen zur Handhabung, Montage und/oder Bearbeitung von Werkstücken. Sie werden häufig in der Luftfahrt, Automobilindustrie, Kunststoff-, Blech- oder Metallverarbeitung, Lebensmittel- und Getränkeindustrie, Medizintechnik, Pharma- und Kosmetikindustrie sowie in anderen elektrotechnischen Gebieten eingesetzt. Zu den Hauptaufgaben von Industrierobotern zählen Montieren, Greifen, allgemeine Handhabung, Be- und Entladen, Maschinenbeschickung, Lackieren, Palettieren, Positionierung, Fräsen, Schleifen, Polieren und/oder Schweißen. Im industriellen Umfeld erfreuen sie sich zunehmender Beliebtheit, da sie Werkstücke automatisiert und präzise bearbeiten können und dabei flexibler einsetzbar sind als etwa Werkzeugmaschinen.

Vorzugsweise ist der Bediener einer Werkzeugmaschine und/oder einer Produktionsmaschine und/oder eines Roboters in einer Industriehalle in Bewegung und/oder benötigt freie Hände zur Bedienung wenigstens einer der genannten Maschinen und/oder um sicher und effizient arbeiten zu können. Häufig wechselt der Bediener zwischen zwei oder mehr Maschinen und benötigt daher stets aktuelle Daten, die ihm vorteilhaft in Echtzeit angezeigt werden.

In einer weiteren vorteilhaften Ausführungsform der Erfindung ist die erste und/oder die zweite Anzeigeeinheit als Display und/oder als Projektor ausgeführt.

In einer weiteren vorteilhaften Ausführungsform der Erfindung ist die brillenartige Vorrichtung vom Bediener als Head-Mounted-Display tragbar.

Vorzugsweise ist die brillenartige Vorrichtung am Kopf des Bedieners befestigt.

Die brillenartige Vorrichtung kann jedoch auch als Head-Up-Display ausgeführt sein. Zudem sind auch andere Anzeigesysteme denkbar.

Das Display ist vorzugsweise ein Gerät zur Anzeige des Teilbildes, das auf LED-Technik (LED = light-emitting diode) - beispielsweise ein OLED-Display (OLED = organic light-emitting diode)- und/oder LCD-Technik (LCD = liquid crystal display) - beispielsweise ein TFT-Display (FTF = thin-film transitor) - basiert.

Der Projektor projiziert das anzuzeigende Teilbild direkt auf die Netzhaut eines Auges.

Vorzugsweise ist die brillenartige Vorrichtung binokular ausgeführt. Hierbei zeigt die erste Anzeigeeinheit das erste Teilbild und die zweite Anzeigeeinheit das zweite Teilbild.

In einer weiteren vorteilhaften Ausführung der Erfindung zeigt die erste Anzeigeeinheit das erste Teilbild einem ersten Auge des Bedieners an, die zweite Anzeigeeinheit zeigt das zweite Teilbild einem zweiten Auge des Bedieners an.

Die erste Recheneinheit generiert hierbei das erste Teilbild. Die erste Recheneinheit übergibt das erste Teilbild, vorzugsweise mittels einer Datenverbindung "Erste Recheneinheit - Erste Anzeigeeinheit", an die Anzeigeeinheit. Die Anzeigeeinheit zeigt das erste Teilbild an.

Die zweite Recheneinheit generiert hierbei das zweite Teilbild. Die zweite Recheneinheit übergibt das zweite Teilbild, vorzugsweise mittels einer Datenverbindung "Zweite Recheneinheit - zweite Anzeigeeinheit", an die Anzeigeeinheit. Die Anzeigeeinheit zeigt das erste Teilbild an.

Jede Datenverbindung kann kabellos oder festverdrahtet ausgeführt sein.

Vorzugsweise zeigen die erste Anzeigeeinheit und die zweite Anzeigeeinheit gleichzeitig einen identischen Bildinhalt aus zwei unterschiedlichen Perspektiven bzw. zwei unterschiedlichen Positionen, sodass im Gehirn des Bedieners mittels Überlagerung des ersten Teilbilds und des zweiten Teilbilds ein räumlicher Eindruck bzw. ein Eindruck von Tiefe (auch 3D-Effekt genannt) erzeugt wird.

Das erste und das zweite Teilbild werden hierbei unabhängig voneinander generiert und zweikanalig übertragen. Dies gewährleistet eine sichere Darstellung des Gesamtbildes, welches vom Bediener als ordnungsgemäßes Gesamtbild erkennbar ist.

Für den Bediener ist erkennbar, wenn ein oder beide Teilbilder fehlerhaft sind. Fällt beispielsweise die erste Recheneinheit aus, kann das erste Teilbild nicht generiert werden. Der Bediener ist somit auf dem ersten Auge "blind". Der Bediener erkennt dadurch ein fehlerhaftes Gesamtbild und somit eine Störung der brillenartigen Vorrichtung.

Arbeitet die erste Recheneinheit beispielsweise verzögert, fehlt dem Bediener der räumliche Eindruck im Gesamtbild, da die beiden Teilbilder verzögert und nicht gleichzeitig angezeigt werden.

Vorzugsweise zeigen die beiden Anzeigeeinheiten optische Warnsignale und/oder Erinnerungen an. Der Bediener kann sich auf zeitkritische, wichtige Aufgaben konzentrieren und hat hierbei seine Hände frei. Warnsignale werden dem Bediener angezeigt und können nicht versehentlich übersehen werden oder z. B. bei Umgebungslärm überhört werden.

In einer weiteren vorteilhaften Ausführungsform der Erfindung ist die brillenartige Vorrichtung als Schnittstelle zwischen dem Bediener und der Werkzeugmaschine ausgeführt.

Die Anzeigeeinheiten zeigen vorzugsweise ein virtuelles HMI (HMI = human machine interface) an, womit die Werkzeugmaschine und/oder die Produktionsmaschine und/oder der Roboter bedient werden können. Beispielsweise können die Aktionen "Start", "Stop" und/oder "Not-Aus" ausgelöst bzw. ausgeführt werden.

In einer weiteren vorteilhaften Ausführung der Erfindung ist die erste und/oder die zweite Erfassungseinheit als Kamera ausgeführt.

Vorzugsweise sind die beiden Erfassungseinheiten an unterschiedlichen Positionen angeordnet. Vorzugsweise erfasst die erste Erfassungseinheit eine erste Perspektive und die zweite Erfassungseinheit erfasst eine zweite Perspektive, die von der ersten Perspektive verschieden ist.

Auf diese Weise kann ein Objekt mit drei Koordinaten (X-Koordinate, Y-Koordinate, Z-Koordinate) im Raum erfasst werden.

In einer weiteren vorteilhaften Ausführung der Erfindung erfasst die als Kamera ausgeführte Erfassungseinheit wenigstens zwei Dimensionen.

Beispielsweise erfasst die erste Erfassungseinheit die X-Koordinate und die Y-Koordinate eines Objekts im ersten Umgebungsbereich (also die erste Bildinformation) und die zweite Erfassungseinheit erfasst die X-Koordinate und die Z-Koordinate (also die zweite Bildinformation) des Objekts im zweiten Umgebungsbereich. Somit ist eine Tiefenerkennung im Raum sichergestellt.

In einer weiteren vorteilhaften Ausführung der Erfindung ist der ersten Recheneinheit und der zweiten Recheneinheit eine übergeordnete Recheneinheit übergeordnet, vorzugsweise zum Vergleichen der ersten Bildinformation und der zweiten Bildinformation.

Eine Auswertung des Vergleichsergebnisses lässt eine ordnungsgemäße Funktion bzw. eine Störung der brillenartigen Vorrichtung erkennen.

Vorzugsweise weist das bereits beschriebene virtuelle HMI wenigstens einen virtuellen Schalter oder Taster auf. Der virtuelle Schalter oder Taster ist vorzugsweise derart ausgebildet die Aktion "Start" und/oder die Aktion "Stop" und/oder die Aktion "Not-Aus" auszuführen. Jedoch sind auch andere Aktionen denkbar.

Vorzugsweise ist jeder Aktion ein Taster oder Schalter zugewiesen. Jedoch sind auch Mehrfachbelegungen eines Tasters oder Schalters mit wenigstens zwei Aktionen möglich.

Vorzugsweise betätigt der Bediener mit einem Finger einen virtuellen Schalter oder Taster, um eine Aktion herbeizuführen. Die erste Erfassungseinheit erfasst hierbei den ersten Umgebungsbereich und wandelt dies in eine erste Bildinformation um, die zweite Erfassungseinheit umfasst den zweiten Umgebungsbereich und wandelt dies in eine zweite Bildinformation um.

Das Objekt, also der Finger, kann wie oben beschrieben auf diese Weise im Raum erfasst werden. Der Finger wird vorzugsweise aus zwei verschiedenen Perspektiven von den beiden Erfassungseinheiten erfasst.

Vorzugsweise übergibt die erste Erfassungseinheit, vorzugsweise mittels einer Datenverbindung "Erste Erfassungseinheit - Erste Recheneinheit", die erste Bildinformation an die erste Recheneinheit. Vorzugsweise übergibt die zweite Erfassungseinheit, vorzugsweise mittels einer Datenverbindung "Zweite Erfassungseinheit - Zweite Recheneinheit", die zweite Bildinformation an die zweite Recheneinheit.

Vorzugsweise übergibt die erste Recheneinheit, vorzugsweise mittels einer Datenverbindung "Erste Recheneinheit - Übergeordnete Recheneinheit", die erste Bildinformation an die übergeordnete Recheneinheit. Beispielsweise beinhaltet die erste Bildinformation Angaben über X-Koordinaten und Y-Koordinaten des Fingers.

Vorzugsweise übergibt die zweite Recheneinheit, vorzugsweise mittels einer Datenverbindung "Zweite Recheneinheit - Übergeordnete Recheneinheit", die zweite Bildinformation an die übergeordnete Recheneinheit. Beispielsweise beinhaltet die zweite Bildinformation Angaben über X-Koordinaten und Z-Koordinaten des Fingers.

Vorzugsweise vergleicht die übergeordnete Recheneinheit die beiden Bildinformationen und leitet bei Übereinstimmung eine Ausführung der Aktion in die Wege. Auf diese Weise ist die Aktion sicher und zweikanalig ausführbar.

Anknüpfend an das eben genannte Beispiel vergleicht die übergeordnete Recheneinheit beispielsweise die X-Koordinaten der beiden Bildinformationen.

In einer weiteren vorteilhaften Ausführungsform der Erfindung ist die brillenartige Vorrichtung als eine Virtual-Reality-Brille oder Augmented-Reality-Brille ausgebildet.

Virtual Reality (VR) ist eine Simulation einer dreidimensionalen Umgebung, in der sich der Bediener frei umsehen und mit der der Bediener interagieren kann. Die Simulation gibt ihm und seinen Sinnen das Gefühl, sich mit dem ganzen Körper darin zu befinden. Es handelt sich hierbei um eine künstliche, virtuelle Welt. Die Virtual-Reality-Brille zeigt eine gänzlich virtuelle Umgebung an.

Augmented Reality (AR) stellt eine Verbindung von realer Welt und computergenerierten Inhalten dar. Eine sogenannte "See-Through"-Datenbrille ermöglicht dem Benutzer z. B., seine reale Umgebung wahrzunehmen, während virtuelle, computergenerierte Inhalte und/oder Informationen eingeblendet werden.

Jedoch besteht bei AR-Brillen auch die Möglichkeit, die reale Umgebung mit wenigstens einer Kamera zu erfassen und diese, vorzugsweise zusammen mit virtuellen Inhalten und/oder Informationen, über eine Anzeigeeinheit dem Bediener sichtbar zu machen.

Ferner kann die brillenartige Vorrichtung auch als Mixed-Reality-Brille ausgebildet sein.

Ferner besteht die Möglichkeit, eine konventionelle AR- oder VR-Brille mit additiver Hardware aufzurüsten, um eine erfindungsgemäße brillenartige Vorrichtung zu schaffen.

In einer weiteren vorteilhaften Ausführungsform der Erfindung dient das erfindungsgemäße Verfahren einem Bedienen der Werkzeugmaschine und/oder der Produktionsmaschine und/oder des Roboters.

In einer weiteren vorteilhaften Ausführungsform der Erfindung erfolgen die Darstellung des Gesamtbildes und/oder das Ausführen der Aktion zweikanalig.

Zweikanalig bezüglich der Darstellung des Gesamtbildes bedeutet hierbei vorzugsweise: Das erste Teilbild und das zweite Teilbild werden unabhängig voneinander generiert. Das erste Teilbild wird in der ersten Recheneinheit generiert, das zweite Teilbild wird in der zweiten Recheneinheit generiert. Vorzugsweise mittels der Datenverbindung "Erste Recheneinheit - Erste Anzeigeeinheit" wird das erste Teilbild von der ersten Recheneinheit an die erste Anzeigeeinheit übergeben. Vorzugsweise mittels der Datenverbindung "Zweite Recheneinheit - Zweite Anzeigeeinheit" wird das zweite Teilbild von der zweiten Recheneinheit an die zweite Anzeigeeinheit übergeben.

Durch die zweikanalige Darstellung kann das Gesamtbild sicher dargestellt werden. Der Bediener erkennt durch ein fehlerhaftes Gesamtbild, dass eine Störung der brillenartigen Vorrichtung vorliegt.

Zweikanalig bezüglich des Ausführens der Aktion bedeutet hierbei vorzugsweise: Vorzugsweise wird der virtuelle Schalter oder Taster mit dem Finger des Bedieners betätigt, um eine Aktion herbeizuführen. Von der ersten Erfassungseinheit wird der erste Umgebungsbereich erfasst und dies in die erste Bildinformation umgewandelt. Von der zweiten Erfassungseinheit wird der zweite Umgebungsbereich erfasst und dies in die zweite Bildinformation umgewandelt. Die erste Bildinformation wird vorzugsweise mittels der Datenverbindung "Erste Erfassungseinheit - Erste Recheneinheit" an die erste Recheneinheit übergeben. Die zweite Bildinformation wird vorzugsweise mittels der Datenverbindung "Zweite Erfassungseinheit - Zweite Recheneinheit" an die zweite Recheneinheit übergeben.

Vorzugsweise wird die erste Bildinformation von der ersten Recheneinheit, vorzugsweise mittels der Datenverbindung "Erste Recheneinheit - Übergeordnete Recheneinheit", an die übergeordnete Recheneinheit übergeben. Vorzugsweise wird die zweite Bildinformation von der zweiten Recheneinheit, vorzugsweise mittels der Datenverbindung "Zweite Recheneinheit - Übergeordnete Recheneinheit", an die übergeordnete Recheneinheit übergeben.

Vorzugsweise wird von der übergeordneten Recheneinheit die erste Bildinformation mit der zweiten Bildinformation verglichen. Bei Übereinstimmung wird die Ausführung der Aktion in die Wege geleitet.

Durch die zweikanalige Erfassung kann die Aktion sicher ausgeführt werden.

In einer weiteren vorteilhaften Ausführungsform der Erfindung wird ein fehlerhaftes Gesamtbild - wie bereits erläutert - vom Bediener erkannt.

In einer weiteren vorteilhaften Ausführungsform der Erfindung wird die Aktion als Reaktion auf eine durch den Bediener veranlasste Bedienhandlung ausgeführt.

Vorzugsweise stellt das Betätigen des virtuellen Schalters oder Tasters mit dem Finger (Berührung) des Bedieners die Bedienhandlung dar. Jedoch kann der Schalter oder Taster auch auf andere Weise betätigt werden.

Ferner sind auch andere Bedienhandlungsarten möglich wie z. B. ein Sprachbefehl.

In einer weiteren vorteilhaften Ausführungsform der Erfindung wird die Bedienhandlung als Geste ausgeführt.

Vorzugsweise sind Gesten Bewegungen von Körperteilen, insbesondere von einem oder mehreren Arm bzw. Armen und/oder einer oder mehreren Hand bzw. Händen.

Jedoch sind auch andere Bewegungen möglich, z. B. Kopfbewegungen, Fuß- und/oder Beinbewegungen.

Die Erfindung bietet den Vorteil, dass die heute mit der Werkzeugmaschine und/oder der Produktionsmaschine und/oder dem Roboter fest verbundenen Schalter, Taster oder anwendungsspezifischen Zusatzkomponenten nicht mehr benötigt werden. Ein Kunde spart auf diese Weise Kosten sowohl für eine Beschaffung als auch für eine Instandhaltung ein.

Zudem kann der Bediener stets auf aktuelle, die jeweilige Maschine betreffende Daten in Echtzeit zugreifen, wodurch eine Produktivität gesteigert und Zeit eingespart wird.

Im Folgenden wird die Erfindung anhand der in den Figuren dargestellten Ausführungsbeispiele näher beschrieben und erläutert. Es zeigen:
- FIG 1: eine Ausgestaltung einer erfindungsgemäßen brillenartigen Vorrichtung,
- FIG 2: ein erfindungsgemäßes Verfahren zum Ausführen einer Aktion,
- FIG 3: ein erfindungsgemäßes Verfahren zur Darstellung eines Gesamtbildes,
- FIG 4: einen Bediener mit einer brillenartigen Vorrichtung vor einer Werkzeugmaschine sowie ein eingeblendetes Projektionsabbild.

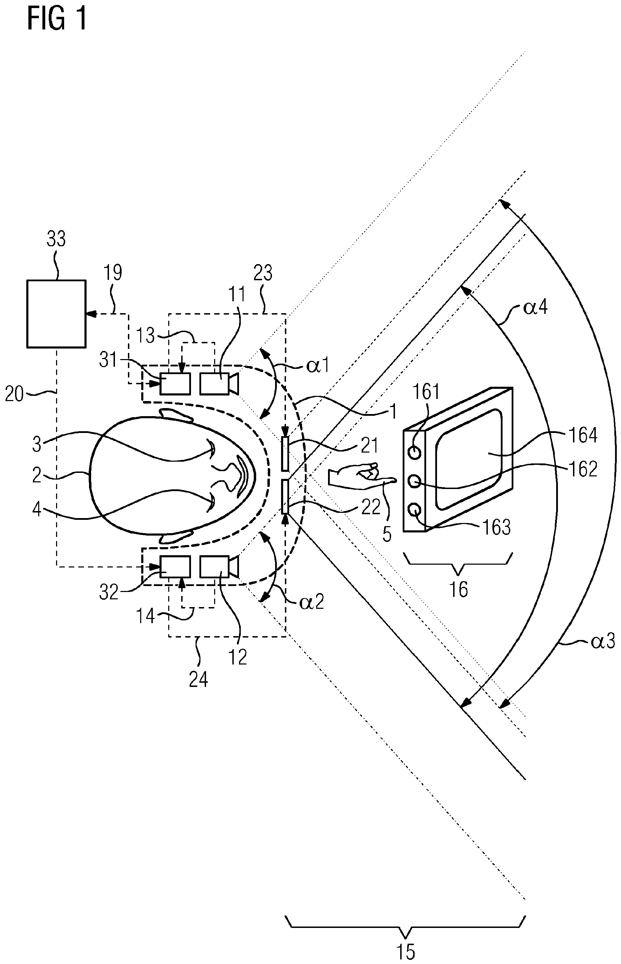

FIG 1 zeigt eine Ausgestaltung einer erfindungsgemäßen brillenartigen Vorrichtung 1. Die brillenartige Vorrichtung 1 wird in der Figur am Kopf eines Bedieners 2 getragen. Vorteilhaft ist die brillenartige Vorrichtung 1 als Head-Mounted-Display ausgeführt.

Die brillenartige Vorrichtung 1 weist zwei Anzeigeeinheiten auf. Die Anzeigeeinheiten können als Display 21 bzw. 22 oder als Projektor ausgeführt sein.

Die brillenartige Vorrichtung 1 weist in der Figur ein erstes Display 21 und ein zweites Display 22 auf. Das erste Display 21 zeigt einem ersten Auge 3 ein erstes Teilbild an. Das zweite Display 22 zeigt einem zweiten Auge 4 ein zweites Teilbild an.

Die brillenartige Vorrichtung 1 weist zudem eine erste Erfassungseinheit auf, die als erste Kamera 11 ausgeführt ist. Zudem weist die brillenartige Vorrichtung 1 eine zweite Erfassungseinheit auf, die als zweite Kamera 12 ausgeführt ist.

Vorzugsweise kann jede Kamera 11 bzw. 12 zwei Dimensionen erfassen.

Die brillenartige Vorrichtung 1 weist zudem eine erste Recheneinheit 31 sowie eine zweite Recheneinheit 32 auf.

Die erste Kamera 11 erfasst einen ersten Umgebungsbereich α1 des Bedieners 2, die zweite Kamera 12 erfasst einen zweiten Umgebungsbereich a2. Die beiden Umgebungsbereiche α1 und a2 grenzen zumindest aneinander an. Vorzugsweise überschneiden sich jedoch die beiden Umgebungsbereiche α1 und a2, wie in der Figur gezeigt ist.

Die erste Kamera 11 wandelt den ersten Umgebungsbereich α1 in eine erste Bildinformation um. Die erste Bildinformation kann von der ersten Recheneinheit 31 verarbeitet werden.

Die zweite Kamera 12 wandelt den zweiten Umgebungsbereich a2 in eine zweite von der zweiten Recheneinheit verarbeitbare Bildinformation um.

Die erste Kamera übergibt die erste Bildinformation über eine Datenverbindung 13 an die erste Recheneinheit. Die zweite Kamera 12 übergibt die zweite Bildinformation an die zweite Recheneinheit 32 über die Datenverbindung 14.

Die Datenverbindungen können sowohl mit einer physikalischen Verbindung oder auch kabellos ausgeführt sein.

Die erste Recheneinheit 31 generiert ein erstes Teilbild und übergibt über die Datenverbindung 32 das erste Teilbild an das erste Display 21.

Die zweite Recheneinheit 32 generiert ein zweites Teilbild und übergibt über die Datenverbindung 24 das zweite Teilbild an das zweite Display 22.

Das erste Display 21 bildet den in der Figur gezeigten Blickwinkel a3 ab. Das zweite Display 22 bildet den in der Figur gezeigten Blickwinkel a4 ab. Die beiden Blickwinkel a3 und a4 überschneiden sich und bilden ein für den Bediener sichtbares Projektionsabbild 15 ab.

Wie in der Figur gezeigt sieht ein erstes Auge 3 den Blickwinkel a3 und ein zweites Auge 4 den Blickwinkel a4. Somit werden das erste Teilbild im Blickwinkel a3 und das zweite Teilbild im Blickwinkel a4 überlagert, wodurch ein Gesamtbild entsteht. Ein ordnungsgemäßes Gesamtbild kann vom Bediener 2 erkannt werden. Hierbei kann auch ein fehlerhaftes Gesamtbild vom Bediener 2 erkannt und somit eine Störung der brillenartigen Vorrichtung erkannt werden.

In der Figur zeigt das virtuelle Projektionsabbild 15 ein virtuelles Human Machine Interface (HMI) 16. Das Projektionsabbild 15 entspricht dem Gesamtbild. Das HMI 16 dient beispielsweise einer Interaktion von Bediener 2 mit einer Werkzeugmaschine.

Die erste und die zweite Kamera 11 und 12 können eine Umgebung des Bedieners erfassen. Die erste Kamera erfasst hierbei einen ersten Umgebungsbereich α1, die zweite Kamera erfasst hierbei einen zweiten Umgebungsbereich a2. Über die Datenverbindungen 13 und 14 werden die erste Bildinformation und die zweite Bildinformation an die erste Recheneinheit 31 und die zweiten Recheneinheit 32 übergeben.

Beispielsweise kann eine Recheneinheit bzw. können beide Recheneinheiten 31 und 32 erkennen, vor welcher Maschine, beispielsweise Werkzeugmaschine, der Bediener 2 steht und ein zugehöriges HMI einblenden. Hierbei berechnet die erste Recheneinheit 31 ein erstes Teilbild und übergibt es mittels der Datenverbindung 23 an das erste Display 21. Die zweite Recheneinheit 32 generiert ein zweites Teilbild und übergibt es mittels der Datenverbindung 24 an das zweite Display 22.

Die beiden Displays 21 und 22 zeigen die jeweiligen Teilbilder an. Vorzugsweise entspricht das erste Teilbild dem zweiten Teilbild. Ist eines der beiden Teilbilder fehlerhaft, erkennt dies der Bediener 2 sofort, da die beiden Teilbilder kein ordnungsgemäßes Gesamtbild ergeben. Auf diese Weise erkennt der Bediener 2 eine Störung der brillenartigen Vorrichtung 1. Dies ermöglicht eine sichere Bedienung der Maschine, z. B. der Werkzeugmaschine.

Fällt beispielsweise eines der beiden Displays 21 bzw. 22 aus, erkennt das der Bediener 2, da er auf einem Auge "blind" ist. Durch die Überlagerung der beiden Teilbilder entsteht zudem ein dreidimensionales Projektionsabbild 15.

Wie in der Figur gezeigt umfasst das virtuelle HMI 16 eine virtuelle HMI-Anzeige 164 und drei virtuelle Knöpfe 161, 162 und 163. Die virtuellen Knöpfe sind beispielsweise als Schalter oder Taster ausgeführt.

Der Bediener 2 kann das virtuelle HMI 16 beispielsweise mittels eines Fingers 5 bedienen. Drückt der Bediener 2 hierbei auf einen virtuellen Knopf 162 des virtuellen HMI 16, erfasst diese Bedienhandlung sowohl die erste Kamera 11 sowie auch die zweite Kamera 12. Die daraus resultierenden Bildinformationen werden jeweilig über die Datenverbindung 13 bzw. 14 an die erste bzw. zweite Recheneinheit 31 bzw. 32 weitergegeben.

Beispielhaft ist in der Figur auch eine übergeordnete Recheneinheit 33 gezeigt. Die erste Recheneinheit 31 übergibt mittels der Datenverbindung 19 die Bildinformation, die das Bedienen des virtuellen HMI 16 zeigt, an die übergeordnete Steuereinheit 33. Die zweite Recheneinheit 32 übergibt die Bildinformation über die Datenverbindung 20 an die übergeordnete Recheneinheit 33.

Die übergeordnete Recheneinheit 33 kann überprüfen, ob die Bildinformation der ersten Kamera 11 mit der Bildinformation der zweiten Kamera 12 übereinstimmt. Ist dies der Fall, kann eine Aktion, beispielsweise "Start" der Werkzeugmaschine, "Stop" oder auch "Not-Aus", veranlasst werden.

Da sowohl das Erfassen von Bildinformationen als auch die Darstellung des Gesamtbildes zweikanalig und somit redundant erfolgen, ist eine derartige brillenartige Vorrichtung 1 sicher. Stimmen die Bildinformation der ersten Kamera 11 und die Bildinformation der zweiten Kamera 12 nicht überein, wird ein Fehler bzw. eine Störung der brillenartigen Vorrichtung 1 erkannt und die Aktion wird nicht ausgeführt oder gestoppt. Über diese Störung kann der Bediener 2 z. B. mittels eines Anzeigefeldes im Projektionsabbild 15 informiert werden. Ferner kann - beispielsweise durch die übergeordnete Recheneinheit 33 - veranlasst werden, dass die Maschine in einen sicheren Zustand gebracht wird.

Eine Kommunikation von brillenartiger Vorrichtung 1 und Werkzeugmaschine ist beispielsweise mittels Kabel oder auch Funk möglich. Auch eine optische Übertragung von Daten zu Kommunikationszwecken ist denkbar. Die beschriebene brillenartige Vorrichtung 1 ermöglicht eine Integration von sogenannten 3D-Brillen im industriellen Umfeld.

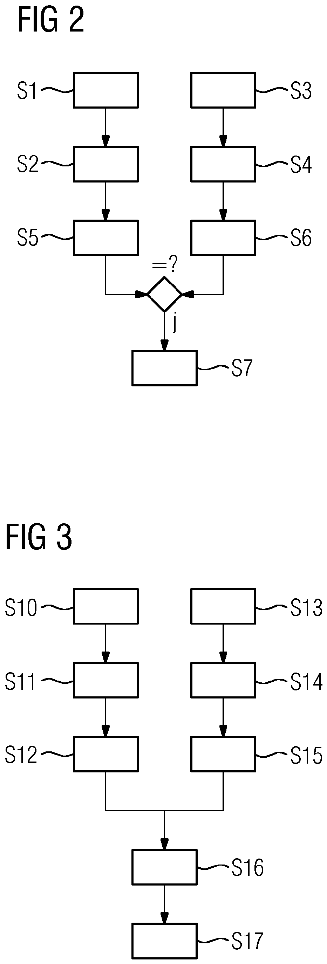

FIG 2 zeigt ein erfindungsgemäßes Verfahren zum Ausführen einer Aktion.

In Verfahrensschritt S1 wird der erste Umgebungsbereich des Bedieners durch die erste Erfassungseinheit erfasst.

In Verfahrensschritt S2 wird der erste Umgebungsbereich in die erste von der ersten Recheneinheit verarbeitbare Bildinformation umgewandelt.

In Verfahrensschritt S5 wird die erste Bildinformation von der ersten Erfassungseinheit an die erste Recheneinheit übergeben.

In Verfahrensschritt S3 wird der zweite Umgebungsbereich des Bedieners durch die zweite Erfassungseinheit erfasst.

In Verfahrensschritt S4 wird der zweite Umgebungsbereich in die zweite von der zweiten Recheneinheit verarbeitbare Bildinformation umgewandelt.

In Verfahrensschritt S6 wird die zweite Bildinformation von der zweiten Erfassungseinheit an die zweite Recheneinheit übergeben.

Stimmen die erste Bildinformation und die zweite Bildinformation überein - in der Figur mit =? gekennzeichnet - wird die Aktion in Verfahrensschritt S7 sicher ausgeführt. Dieser Weg ist in der Figur mit j gekennzeichnet.

Eine Aktion ist beispielsweise "Start", "Stop" oder "Not-Aus" einer Werkzeugmaschine.

FIG 3 zeigt ein erfindungsgemäßes Verfahren zur Darstellung eines Gesamtbildes.

In Verfahrensschritt S10 wird das erste Teilbild durch die erste Recheneinheit generiert.

In Verfahrensschritt S11 wird das erste Teilbild von der ersten Recheneinheit an die erste Anzeigeeinheit übergeben.

In Verfahrensschritt S12 wird das erste Teilbild durch die erste Anzeigeeinheit angezeigt.

In Verfahrensschritt S13 wird das zweite Teilbild durch die zweiten Recheneinheit generiert.

In Verfahrensschritt S14 wird das zweite Teilbild von der zweiten Recheneinheit an die zweite Anzeigeeinheit übergeben.

In Verfahrensschritt S15 wird das zweite Teilbild durch die zweite Anzeigeeinheit angezeigt.

Durch eine Überlagerung des ersten Teilbilds und des zweiten Teilbilds in Verfahrensschritt S16 kann ein Gesamtbild sicher dargestellt werden, da vom Bediener in Verfahrensschritt S17 erkannt wird, ob ein ordnungsgemäßes Gesamtbild vorliegt.

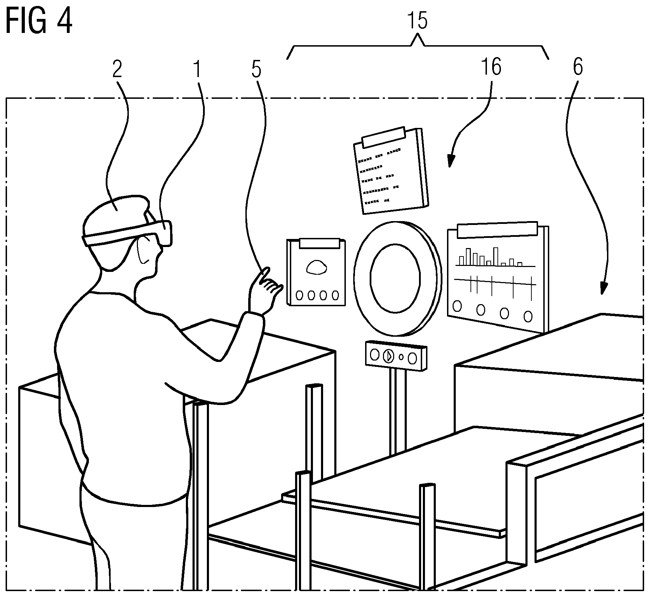

Der Bediener erkennt zudem ein fehlerhaftes Gesamtbild und kann so auf eine defekte brillenartige Vorrichtung schließen. FIG 4 zeigt einen Bediener 2 mit einer brillenartigen Vorrichtung 1 vor einer Werkzeugmaschine 6 sowie ein eingeblendetes Projektionsabbild 15.

Die Figur zeigt, dass der Bediener 2 mit einem Finger 5 auf einen virtuellen Knopf im virtuellen Projektionsabbild 15 drücken möchte. Das Projektionsabbild 15 weist ein HMI 16 auf. Dieses ermöglicht die Interaktion von Bediener 2 und Werkzeugmaschine 6. In der Figur ist das HMI 16 als Teil einer Augmented Reality eingeblendet. Das bedeutet, dass der Bediener 2 ein virtuelles Projektionsabbild 15 des HMI 16 in einer realen Umgebung sieht.

Beispielsweise erfassen die beiden Erfassungseinheiten die Umgebung des Bedieners. Die erfasste Umgebung wird samt virtuellem Projektionsabbild 15 dem Bediener über die beiden Anzeigeeinheiten angezeigt.

## Patentansprüche

1. Brillenartige Vorrichtung (1) umfassend:
- eine erste Recheneinheit (31)
- eine von der ersten Recheneinheit unabhängige zweite Recheneinheit (32)
- eine erste Anzeigeeinheit (21)
- eine von der ersten Anzeigeeinheit unabhängige zweite Anzeigeeinheit (22)
- eine erste Erfassungseinheit (11)
- eine von der ersten unabhängige zweite Erfassungseinheit (12),
wobei die erste Erfassungseinheit (11) einen ersten Umgebungsbereich (α1) eines Bedieners (2) erfasst,
wobei die erste Erfassungseinheit (11) den ersten Umgebungsbereich (α1) in eine erste von der ersten Recheneinheit (31) verarbeitbare Bildinformation umwandelt,
wobei die zweite Erfassungseinheit (12) einen zweiten Umgebungsbereich (a2) des Bedieners (2) erfasst,
wobei die zweite Erfassungseinheit (12) den zweiten Umgebungsbereich (a2) in eine zweite von der zweiten Recheneinheit (32) verarbeitbare Bildinformation umwandelt,
wobei sich der erste Umgebungsbereich (α1) und der zweite Umgebungsbereich (a2) überschneiden,
wobei die erste Erfassungseinheit (11) die erste Bildinformation an die erste Recheneinheit (31) übergibt,
wobei die zweite Erfassungseinheit (12) die zweite Bildinformation an die zweite Recheneinheit (32) übergibt,
wobei eine Aktion bei Übereinstimmung der ersten Bildinformation und der zweiten Bildinformation ausführbar ist, und/oder
wobei die erste Recheneinheit (31) ein erstes Teilbild (a3) generiert,
wobei die erste Recheneinheit (31) das erste Teilbild (a3) an die erste Anzeigeeinheit (21) übergibt,
wobei die erste Anzeigeeinheit (21) das erste Teilbild (a3) anzeigt,
wobei die zweite Recheneinheit (32) ein zweites Teilbild (a4) generiert,
wobei die zweite Recheneinheit (32) das zweite Teilbild (a4) an die zweite Anzeigeeinheit (22) übergibt,
wobei die zweite Anzeigeeinheit (22) das zweite Teilbild (a4) anzeigt,
wobei ein Gesamtbild mittels Überlagerung des ersten Teilbildes (a3) und des zweiten Teilbildes (a4) sicher darstellbar ist,
wobei ein ordnungsgemäßes Gesamtbild vom Bediener (2) erkennbar ist.

2. Brillenartige Vorrichtung (1) nach Anspruch 1, wobei die brillenartige Vorrichtung (1) derart ausgebildet ist, eine Werkzeugmaschine (6) und/oder eine Produktionsmaschine und/oder einen Roboter zu bedienen.

3. Brillenartige Vorrichtung (1) nach einem der vorhergehenden Ansprüche, wobei die erste und/oder die zweite Anzeigeeinheit (21, 22) als Display und/oder als Projektor ausgeführt ist.

4. Brillenartige Vorrichtung (1) nach einem der vorhergehenden Ansprüche, wobei die erste Anzeigeeinheit (21) das erste Teilbild (a3) einem ersten Auge (3) des Bedieners (2) anzeigt, wobei die zweite Anzeigeeinheit (22) das zweite Teilbild (a4) einem zweiten Auge (4) des Bedieners (2) anzeigt.

5. Brillenartige Vorrichtung (1) nach einem der vorhergehenden Ansprüche, wobei die erste und/oder zweite Erfassungseinheit (11, 12) als Kamera ausgeführt ist.

6. Brillenartige Vorrichtung (1) nach einem der vorhergehenden Ansprüche, wobei die als Kamera ausgeführte Erfassungseinheit (11, 12) wenigstens zwei Dimensionen erfasst.

7. Brillenartige Vorrichtung (1) nach einem der vorhergehenden Ansprüche, wobei der ersten Recheneinheit (31) und der zweiten Recheneinheit (32) eine übergeordnete Recheneinheit (33) übergeordnet ist, vorzugsweise zum Vergleichen der ersten Bildinformation und der zweiten Bildinformation.

8. Brillenartige Vorrichtung (1) nach einem der vorhergehenden Ansprüche, wobei die brillenartige Vorrichtung (1) als eine Virtual-Reality-Brille oder Augmented-Reality-Brille ausgebildet ist.

9. Brillenartige Vorrichtung nach einem der vorhergehenden Ansprüche, wobei die brillenartige Vorrichtung als Schnittstelle zwischen dem Bediener und der Werkzeugmaschine ausgeführt ist.

10. Brillenartige Vorrichtung (1) nach einem der vorhergehenden Ansprüche, wobei die brillenartige Vorrichtung (1) vom Bediener (2) als Head-Mounted-Display tragbar ist.

11. Verfahren zur Darstellung eines Gesamtbildes und/oder zum Ausführen einer Aktion mit einer brillenartigen Vorrichtung (1) mit folgenden Schritten:
- Erfassen (S1) eines ersten Umgebungsbereichs (α1) eines Bedieners (2) durch eine erste Erfassungseinheit (11)
- Umwandeln (S2) des ersten Umgebungsbereichs (α1) in eine erste von einer ersten Recheneinheit (31) verarbeitbare Bildinformation
- Erfassen (S3) eines zweiten Umgebungsbereichs (a2) des Bedieners (2) durch eine zweite Erfassungseinheit (32)
- Umwandeln (S4) des zweiten Umgebungsbereichs (a2) in eine zweite von einer zweiten Recheneinheit (32) verarbeitbare Bildinformation
- Übergeben (S5) der ersten Bildinformation von der ersten Erfassungseinheit (11) an die erste Recheneinheit (31)
- Übergeben (S6) der zweiten Bildinformation von der zweiten Erfassungseinheit (12) an die zweite Recheneinheit (32),
wobei eine Aktion bei Übereinstimmung der ersten Bildinformation und der zweiten Bildinformation sicher ausgeführt wird (S7),
und/oder
- Generieren (S10) eines ersten Teilbilds (a3) durch die erste Recheneinheit (31)
- Übergeben (S11) des ersten Teilbilds (a3) von der ersten Recheneinheit (31) an eine erste Anzeigeeinheit (21)
- Anzeigen (S12) des ersten Teilbilds (a3) durch die erste Anzeigeeinheit (21)
- Generieren (S13) eines zweiten Teilbilds (a4) durch die zweite Recheneinheit (32)
- Übergeben (S14) des zweiten Teilbilds (a4) von der zweiten Recheneinheit (32) an eine zweite Anzeigeeinheit (22)
- Anzeigen (S15) des zweiten Teilbilds (a4) durch die zweite Anzeigeeinheit (22),
wobei ein Gesamtbild mittels Überlagerung des ersten Teilbilds (a3) und des zweiten Teilbilds (a4) sicher dargestellt wird (S16),
wobei ein ordnungsgemäßes Gesamtbild vom Bediener (2) erkannt wird (S17).

12. Verfahren nach Anspruch 11 zum Bedienen einer Werkzeugmaschine (6) und/oder einer Produktionsmaschine und/oder eines Roboters.

13. Verfahren nach einem der Ansprüche 11 oder 12, wobei die Darstellung des Gesamtbildes und/oder das Ausführen der Aktion zweikanalig erfolgen.

14. Verfahren nach einem der Ansprüche 12 bis 13, wobei ein fehlerhaftes Gesamtbild vom Bediener (2) erkannt wird.

15. Verfahren nach einem der Ansprüche 11 bis 14, wobei die Aktion als Reaktion auf eine durch den Bediener (2) veranlasste Bedienhandlung ausgeführt wird.

16. Verfahren nach einem der Ansprüche 11 bis 15, wobei die Bedienhandlung als Geste ausgeführt wird.
